# EUROPEAN PATENT APPLICATION

(11) **EP 4 613 562 A1**
(43) Date of publication of application: **10.09.2025**
(21) Application number: 23884797.4
(22) Date of filing: 30.10.2023
(51) Int. Cl.: B60R 13/02, G02B 1/10, B32B 27/36

(54) **VEHICLE OPTICAL DECORATIVE FILM, AND OPTICAL TRIM ASSEMBLY USED FOR INTERIOR OF VEHICLE**

(30) Priority: 31.10.2022 CN 202211349599
(71) Applicant: Yanfeng International Automotive Technology Co., Ltd., Shanghai 201306 (CN)
(72) Inventor: ZHANG, Jixiang, Shanghai 201315 (CN); BI, Xiaofeng, Shanghai 201315 (CN)
(74) Representative: Meissner Bolte Partnerschaft mbB
(86) International application number: PCT/CN2023/127532
(87) International publication number: WO 2024/093865

(57) **Abstract**

The present invention provides an optical decorative film for vehicles and an optical trim assembly. The optical decorative film comprises a base layer, and a texture structure, wherein the texture structure is arranged on at least one surface and is configured to comprise a plurality of texture units. Textures of the texture units are different, so that the upper surface of the optical decorative film presents different surface effects at different viewing angles. According to the optical decorative film of the present invention, a plurality of texture units having different textures and arranged on at least one surface are provided, so that the optical decorative film presents different texture effects or surface effects at different viewing angles under external ambient light irradiation. When the optical decorative film is applied to the optical trim assembly, by integrating functional components such as a backlight source, rich and variable optical effects are further provided, and the aesthetics and comfort of the optical trim assembly during use are improved.

## Description

### TECHNICAL FIELD

The present invention relates to the technical field of optical trim, and more particularly to an optical decorative film suitable for use in a vehicle and an optical trim assembly having the optical decorative film.

### BACKGROUND ART

With the rapid development of the automobile industry and the increasing demand of consumers for vehicle functions, consumers tend to focus more on appearance of vehicle interior components, and decorative films are increasingly used in automobile trims.

Conventional decorative films form patterns by, for example, coating on the film by ink printing technology, and the pattern texture is relatively poor due to the limitation of ink material, and it is difficult to obtain a pattern visual effect with rich layers because a single coating of a single color is usually used. In some designs, the decorative film is formed as an optical decoration with a light source to enhance the decoration of the pattern, which still cannot meet the experience needs of manufacturers and consumers for diversified optical effects.

### SUMMARY OF THE INVENTION

An object of the present invention is to provide an optical decorative film for vehicles, which can present different surface effects at different viewing angles, and which can obtain a rich visual effect in layers by different designs of each film layer of the film. When the optical decorative film is applied to the optical trim assembly, by integrating different functional components, it can meet the diversified needs of the consumers and improve the user experience.

In this regard, according to one aspect of the present invention, an optical decorative film for vehicles is provided, where the optical decorative film includes a base layer, and a texture structure, where the texture structure is arranged on at least one surface and is configured to include a plurality of texture units. Textures of the texture units are different, so that the upper surface of the optical decorative film presents different surface effects at different viewing angles.

According to the above technical concept, the present invention may further include any one or more of the following alternative forms.

In some alternatives, the plurality of texture units is arranged continuously or distributed across the surface.

In some alternatives, regional area of the surface covered by each texture unit is the same or different.

In some alternatives, the texture structure includes an optical adhesive attached to the base layer by photolithography or transfer or imprinting.

In some alternatives, the texture structure is formed on one surface of the base layer.

In some alternatives, the base layer includes any one of glass, plastic, veneer, film, leather, fabric, metal, and ceramic.

In some alternatives, the surface effect includes a texture effect presented by the texture structure, and the texture effect includes at least one of dot texture, triangular texture, brushed texture, check texture, gradient texture, starry sky texture, imitation stone texture, wood grain texture, fabric texture, landscape texture, crystal texture, lens texture, stereoscopic relief, characters, graphics, symbols, numbers, beacons, and trademarks.

In some alternatives, the texture structure includes a plurality of grooves and/or a plurality of protrusions, and the plurality of grooves or protrusions are arranged to have different heights, widths, shapes, inclination angles or surface areas.

In some alternatives, the texture structure includes a plurality of grooves and a plurality of protrusions arranged successively or alternately.

In some alternatives, the texture structure further includes a plating layer attached to a surface of the texture structure, or the plating layer and the texture structure are attached to two surfaces of the base layer, respectively.

In some alternatives, the plating layer is a single-layer film or is formed by laminating a plurality of layers of films.

In some alternatives, the plating layer includes a metallic ink.

In some alternatives, the plating layer further includes at least one pattern layer attached directly to the texture structure or attached to the texture structure via a plating layer, or the pattern layer and the texture structure being attached to two surfaces of the base layer, respectively.

In some alternatives, the surface effect includes a pattern presented by the pattern layer, and the pattern includes at least one of a texture, a graphic, a pattern, a line, a character, a symbol, a number, a beacon, and a trademark.

In some alternatives, the optical decorative film is provided to have a color obtained by at least one of the base layer, the texture structure, the plating layer, the pattern layer, and a separate color layer.

In some alternatives, the color layer is attached between two any adjacent layers of the base layer, the texture structure, the plating layer, and the pattern layer.

In some alternatives, the color layer and/or the pattern layer is a single-layer film or coating or is formed by laminating a plurality of layers of films.

In some alternatives, the color layer and/or the pattern layer includes an ink covering all areas or local areas of the color layer and/or the pattern layer.

In some alternatives, the ink includes a metallic ink covering at least local areas of the color layer and/or the pattern layer.

In some alternatives, the optical decorative film for vehicles provides at least one of the following optical effects:
(a) a projection effect and/or a decorative effect and/or a color effect and/or a pattern effect and/or a surface effect and/or a texture effect provided by the optical decorative film, and/or (b) a depth-of-field effect and/or a decorative effect and/or a color effect and/or a pattern effect and/or a surface effect provided by an upper surface of the optical decorative film, and/or (c) an illumination effect provided by incident light emitted by a light source transmitting through the optical decorative film, and/or (d) an illumination effect provided by incident light emitted by a light source transmitting through the optical decorative film and the upper surface.

According to another aspect of the present invention, an optical trim assembly used for interior of a vehicle is provided, where the optical trim assembly includes the above optical decorative film, and a substrate, where the substrate is attached to at least one surface of the optical decorative film, the optical decorative film constituting an outer surface or an intermediate layer of the optical trim assembly.

In some alternatives, the optical trim assembly includes an outer layer member, the optical decorative film is attached between the outer layer member and the substrate, the outer layer member is configured to provide at least one of a hard touch, a soft touch, a metallic touch, scratch resistance, abrasion resistance, and chemical resistance.

In some alternatives, the optical trim assembly further includes a backlight arranged on a side of the substrate away from an observer, the light emitted by the backlight passing through the optical decorative film to present a texture effect and/or a pattern and/or a color on an upper surface of the optical decorative film.

In some alternatives, the optical trim assembly further includes an external light source arranged on a side of the substrate proximate to the observer, the optical decorative film further including ink attached to the texture structure, the ink filling the texture structure, so that the texture effect is invisible to the observer when the external light source is turned off, and the texture effect is visible to the observer when the external light source is turned on.

In some alternatives, the optical trim assembly further includes a camera component arranged on a side of the substrate away from the observer to capture the position of the observer, the backlight or the external light source changing an operating state in response to a change in a viewing angle of the observer, and then changing a texture effect and/or a pattern and/or a color presented by the upper surface of the optical decorative film.

In some alternatives, the optical trim assembly further includes a sensor arranged on a side of the substrate away from the observer to sense the gesture of the observer, the backlight or the external light source changing the operating state in response to the change of the gesture of the observer, and then changing the texture effect and/or pattern and/or color presented by the upper surface of the optical decorative film, the sensor including any one or more of a capacitive film, a force sensor, an infrared sensor, a distance sensor, and an ultrasonic sensor.

According to the optical decorative film of the present invention, a plurality of texture units having different texture structures and arranged on at least one surface are provided, so that the optical decorative film presents different texture effects or surface effects at different viewing angles under external ambient light irradiation condition. When the optical decorative film is applied to the optical trim assembly, by integrating functional components such as a backlight source, rich and variable optical effects are further provided, and the aesthetics and comfort of the optical trim assembly during use are improved. The optical decorative film and the optical trim assembly of the present invention can be applied to various cases to meet the diversified needs of consumers.

### BRIEF DESCRIPTION OF THE DRAWINGS

Other features and advantages of the present invention will be better understood by the alternative embodiments described in detail below in conjunction with the accompanying drawings, in which like numerals designate like or similar parts, where:
- FIG. 1A: is an overall schematic diagram showing exterior of a vehicle;
- FIG. 1B: is a schematic diagram showing interior of a vehicle, which shows various suitable locations where the optical trim assembly can be arranged;
- FIG. 1C: is a schematic diagram showing another viewing angle of interior of a vehicle, which shows suitable locations where the optical trim assembly can be arranged;
- FIG. 2: is a schematic diagram showing an optical decorative film according to an embodiment of the present invention, which shows a texture structure arranged on one surface of a base layer;
- FIG. 3A: is a schematic diagram showing a distribution of a plurality of texture units according to an embodiment, which shows a texture area formed by the plurality of texture units;
- FIG. 3B: is a schematic diagram showing a distribution of a plurality of texture units according to another embodiment, which shows a plurality of texture areas arranged successively; FIG. 3C is a schematic diagram showing a distribution of a plurality of texture units according to another embodiment, showing different texture units in a distributed arrangement and a plurality of texture areas in a distributed arrangement;
- FIG. 3D: is a schematic diagram showing a texture area formed by a plurality of texture units according to another embodiment;
- FIG. 3E: is a schematic diagram showing a texture effect formed by successively arranging a plurality of texture areas as shown in FIG. 3D;
- FIGS. 4A to 4L: are schematic diagrams showing texture effects presented by texture structures of texture units according to different embodiments, respectively;
- FIGS. 5A to 5E: are schematic diagrams showing texture structures of texture units in cross section according to different embodiments, respectively;
- FIG. 6A: is a schematic diagram showing a surface effect of a beacon pattern presented by an optical decorative film according to an embodiment;
- FIG. 6B, similar to FIG. 6A,: shows a schematic diagram showing a surface effect of a beacon pattern presented by an optical decorative film according to another embodiment; FIG. 6C shows schematically a plurality of beacons presenting surface effects with optical decorative films;
- FIG. 7A: is a variant of an embodiment as shown in FIG. 2, which shows a texture structure arranged on another surface of the base layer;
- FIG. 7B: is a variant of an embodiment as shown in FIG. 2, which shows a texture structure arranged on two surfaces of the base layer;
- FIG. 8A: is a schematic diagram showing an optical decorative film according to another embodiment, which shows a plating layer attached to a texture structure;
- FIG. 8B: is a variant of an embodiment as shown in FIG. 8A, which shows a plating layer and a texture structure attached to two surfaces of the base layer, respectively;
- FIG. 8C: is a variant of an embodiment as shown in FIG. 8A, which shows a texture structure arranged on two surfaces of the base layer and a plating layer attached to the texture structure on one of the surfaces;
- FIG. 9A: is a schematic diagram showing an optical decorative film according to another embodiment, which shows a pattern layer attached to a texture structure, and
- FIG. 9B: is a variant of an embodiment as shown in FIG. 9A, which shows two pattern layers attached to a texture structure;
- FIG. 9C: shows a schematic diagram showing a texture structure in the embodiment as shown in FIG. 9A or FIG. 9B;
- FIGS. 9D and 9E: show surface effects presented at different viewing angles by optical decorative films incorporating internal texture structures and pattern layers, respectively;
- FIG. 9F: is a variant of an embodiment as shown in FIG. 9A, and
- FIG. 9G: is a variant of an embodiment as shown in FIG. 9B, respectively, which shows a pattern layer and a texture structure attached to two surfaces of the base layer, respectively;
- FIG. 9H: is a variant of an embodiment as shown in FIG. 9A, which shows that a pattern layer is attached to a texture structure and is attached to the same surface of a base layer with the texture structure;
- FIGS. 9I and 9J: show surface effects presented by an optical decorative film incorporating an external texture structure and a pattern layer in a light source-free and light source environment, respectively;
- FIG. 9K: is a schematic diagram showing a texture structure of the circular areas in FIG. 9J;
- FIG. 10A: is a schematic diagram showing an optical decorative film according to another embodiment, which shows a pattern layer attached to a texture structure via a plating layer;
- FIGS. 10B and 10C: are variants of an embodiment as shown in FIG. 10A, respectively, which shows a pattern layer and a texture structure attached to two surfaces of the base layer, respectively;
- FIG. 10D: is a variant of an embodiment as shown in FIG. 10C, which shows a pattern layer attached to a texture structure and attached to the same surface of a base layer with the texture structure;
- FIG. 10E: is a variant of an embodiment as shown in FIG. 10A, which shows a texture structure arranged on two surfaces of the base layer;
- FIG. 10F: is a variant of an embodiment as shown in FIG. 10E, which shows two pattern layers attached to a texture structure and attached to the texture structure via a plating layer, respectively;
- FIG. 11: is a schematic diagram showing an optical decorative film according to another embodiment, which shows a color layer;
- FIG. 12: is a schematic diagram showing an optical decorative film according to another embodiment, which shows a protective layer;
- FIG. 13: is a schematic diagram showing an optical trim assembly according to one embodiment;
- FIG. 14A: is a schematic diagram showing an optical trim assembly according to another embodiment, which shows a substrate in the form of a framework;
- FIG. 14B: is a variant of an embodiment as shown in FIG. 14A, which shows an outer layer member attached to an optical decorative film;
- FIG. 15: is a schematic diagram showing an optical trim assembly according to another embodiment, which shows a backlight and a camera component;
- FIG. 16: is a schematic diagram showing an optical trim assembly according to another embodiment, which shows a backlight, an external light source, and a capacitive film;
- FIGS. 17A and 17B: respectively show surface effects of optical trim assembly applied to an interior of a vehicle and presented at different viewing angles;
- FIGS. 17C and 17D: show surface effects of the optical trim assembly applied to interior of a vehicle and presented at the same viewing angle and different irradiation angles of external ambient light, respectively, and show the surface effects presented by an internal texture structure and an external texture structure; and
- FIGS. 18A and 18B: respectively show surface effects of an optical trim assembly applied to different locations in the interior of a vehicle and at different viewing angles.

### DETAILED DESCRIPTION OF THE INVENTION

The implementation and use of the embodiments are discussed in detail below. It is to be understood, however, that the specific embodiments discussed are merely illustrative of specific ways of carrying out and using the present invention and are not intended to limit the scope of the present invention. In the description, the structural positions of the respective components, such as upper, lower, top, bottom, etc., are not absolute, but relative. When the individual components are arranged as shown in the drawings, these directional expressions are appropriate, but when the positions of the individual components in the drawings are changed, these directional expressions also change accordingly.

Herein, the expression "comprise" or similar expressions synonymous thereof such as "include", "contain" and "have" are open-ended and do not exclude additional unrecited elements, steps or ingredients.

Herein, the terms "first", "second" etc. are not used to limit the sequence and number of components unless otherwise indicated.

Herein, the meaning of "a plurality" and "layers" means two or more unless otherwise explicitly and specifically defined.

Herein, "outer" and "inner" are directions relative to an observer, "outer" refers to a direction facing the observer, and "inner" refers to a direction away from the observer.

Herein, unless specifically defined otherwise, terms such as "mounted", "connected", and "attached" are to be understood broadly, for example, as fixed connections, detachable connections, or integral; it can be directly connected, or indirectly connected through an intermediate medium, or it can be internal communication of two elements or interaction between two elements. For a person skilled in the art, the specific meaning of the above terms herein may be appreciated according to specific situations.

It should be understood that the term "vehicle" referred to herein includes, but is not limited to, a vehicle, a watercraft, an airplane, etc., where the "vehicle" includes a fuel vehicle, a hybrid vehicle, an electric vehicle, a hydrogen vehicle, etc., and may be a variety of vehicle types, such as a small car, a bus, a rail vehicle, etc., and is not limited to the illustration. In some embodiments described below, the application of the optical decorative film and the optical trim assembly to a small automobile as a vehicle interior trim does not exclude the application of the present invention to other types of vehicles or other applicable scenes.

In the various embodiments described, unless otherwise specified, the thickness of each layer structure in the optical decorative film is within a range of thicknesses generally suitable for use in the art and are not limited to those shown in the figures. Furthermore, although the drawings are shown as substantially planar superimposed film layers, the film layers of the present invention may also be curved. In some cases, not described, special coatings or film layers may be used for the surface of the optical trim assembly to provide functions such as durability and/or comfort.

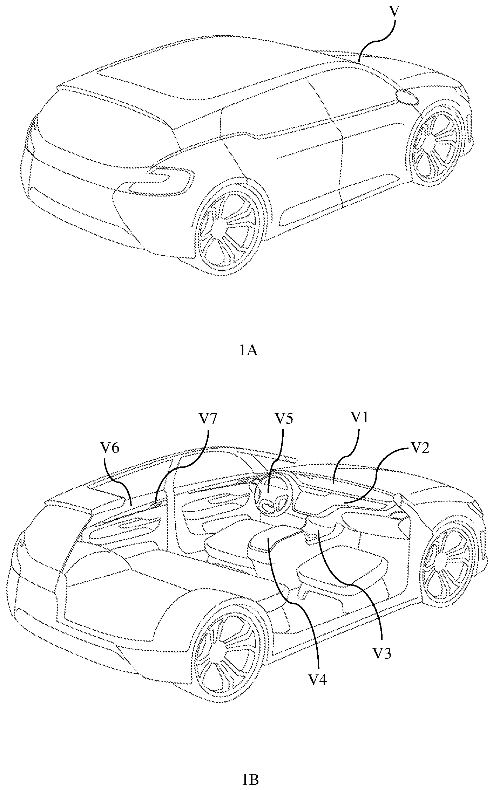

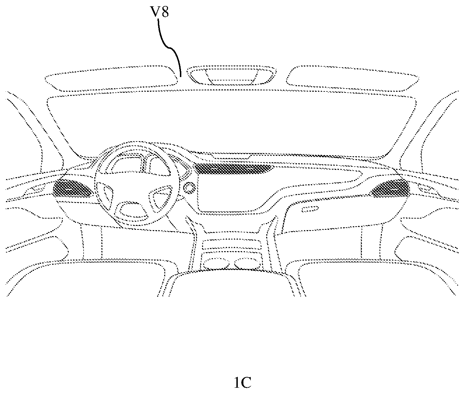

FIGS. 1A to 1C show an example of an optical trim assembly applied to a small car V as a vehicle interior trim. The optical trim assembly is arranged on, for example, any one of an upper instrument panel trim panel V1, a lower instrument panel trim panel V2, a central control trim panel V3, a sub-instrument panel V4, a steering wheel V5, a door side trim panel V6, and a door handle V7 as shown in FIG. 1B, and the roof trim panel V8 as shown in FIG. 1C. It should be understood that the optical trim assembly may also be arranged at any other unidentified location within the vehicle as desired.

Existing optical decorative films are typically printed with ink to form a pattern or combined with the texture of the decorative panel surface (e.g., wood grain or marble grain) to present a decorative texture effect on the panel surface. When a light source is incorporated, it is also possible to obtain a changed pattern visual effect by lighting a light source to reveal the pattern or turning off the light source to hide the pattern. However, with the increasing development of intelligent vehicles and consumers' increasing demand for comfort and aesthetics, the existing optical decorative film is not satisfactory in practice and experience, and it is also expected to obtain richer visual effects such as three-dimensional effects and dynamic pattern changes.

Therefore, according to a concept of the present invention, an optical decorative film for vehicles is provided, where the optical decorative film includes a base layer, and a texture structure, where the texture structure is arranged on at least one surface and is configured to include a plurality of texture units. Textures of the texture units are different, so that the upper surface of the optical decorative film presents different texture effects at different viewing angles. Here, the surface on which the texture structure is arranged includes, but is not limited to, the surface of the base layer, and/or the surface of the individual optional film layers constituting the optical decorative film, and/or the surface of the texture structure itself in the form of the film layer. Further, an upper surface of the optical decorative film refers to the surface generally facing an observer.

It should be understood that the texture structure refers to a micron-scale or even nanometer-scale (e.g., 10 nm to 1000 nm) 3D microstructure, such as a microscopic V-shaped groove, an arc-shaped groove or a concave structure form, or a raised protrusion structure form, which can be formed to imitate a three-dimensional texture effect, a relief effect, etc. by different structural forms and/or the size/distribution of various structural forms, preferably by optical adhesive transfer or imprinting on at least one surface, depending on various needs, and the texture structure may also be produced by machining or chemical etching or photolithography (laser engraving) or other processes that can achieve the same purpose.

Thus, by providing a plurality of texture units on the surface, and having different texture structures of each texture unit, external ambient light achieves different refraction and reflection light effects via the texture structures, so that the optical decorative film of the present invention is configured to present a surface effect on its upper surface, the surface effect including the visual effect presented by the texture structure, and different surface effects with rich layers can be observed at different viewing angles. When the light source is lighted in combination, the optical decorative film of the present invention can also present a changing light effect even if the observation angle or the observation area is fixed by the distribution of the position of the light source and/or the proportion of different light sources (color, light intensity, etc.), thereby creating an unpredictable and distinctive decorative effect.

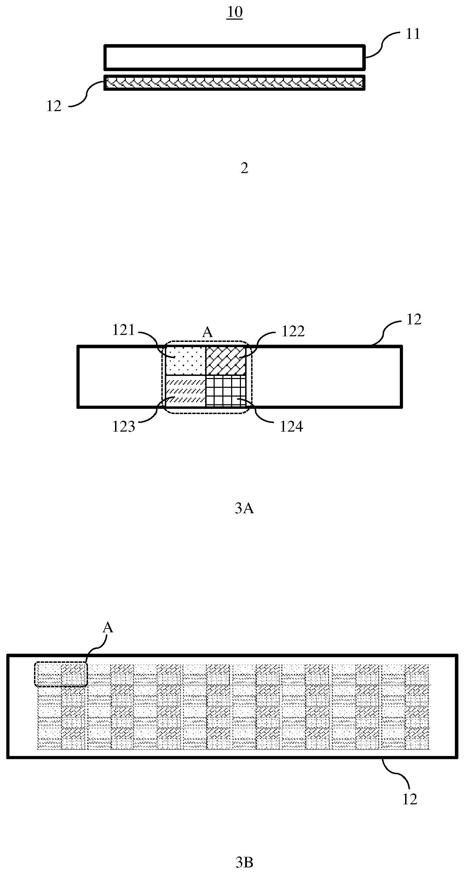

The optical decorative film 10 of one embodiment as shown in connection with FIG. 2 includes a base layer 11 and a texture structure 12 attached to the base layer 11. The base layer 11 includes any one of glass, plastic, wood veneer, film, leather, fabric, metal, and ceramic, and can be selected from a transparent, translucent, or opaque material, and can be set to have a color, such as white, gray, black, etc. according to actual needs. As an alternative, the base layer 11 may be polycarbonate (PC), or polymethyl methacrylate (PMMA), polyethylene terephthalate (PET), polyolefin (PO), polyvinyl chloride (PVC), ethylene-vinyl acetate copolymer (EVA), polyurethane (PU), ABS, PC + ABS, and other suitable composite plastics. The texture structure 12 can be selected from a resin-based material or a solvent-based material, such as an optical adhesive including any one of a photocurable adhesive (UV adhesive), a thermosetting adhesive, an unsaturated polyester adhesive, an epoxy resin adhesive, a polyurethane adhesive, and a silicone gel. In some embodiments, the optical adhesive may be attached to the base layer 11 by photolithography or transfer or imprinting, and a texture structure may be formed on at least one surface, that is, a texture structure may be formed on the surface facing the base layer 11 and/or on the surface facing away from the base layer 11. As an alternative, the texture structure, for example in the form of an optical adhesive, may be in the form of a film layer having a film thickness of 1 to 999 nm, preferably 20 to 100 nm, or a film thickness of 1 to 999 micrometers, preferably 20 to 100 micrometers. In most cases, the texture structure can adopt a transparent film layer. In some embodiments, such as where the texture structure is formed by photolithography or transfer or imprinting with a photocurable adhesive, the photocurable adhesive may itself be colored such that the visual effect presented varies in color. In the shown embodiment, an observer may observe the varying texture effect from an outer surface of the base layer 11 of the optical decorative film 10 facing away from the texture structure 12 (i.e., above FIG. 2), and it will be understood that the texture effect may also be observed in some cases on an inner surface of the texture structure 12 facing away from the base layer 11 (i.e., below FIG. 2).

Referring to one embodiment of FIG. 3A, the texture structure 12 may include a plurality of texture units, such as a first texture unit 121, a second texture unit 122, a third texture unit 123, and a fourth texture unit 124 distributed on the texture structure 12 in the form of a film as shown, the texture units having different texture structures so that the reflection and refraction angles of incident light are different, such different texture effects include different texture structures presented, or the texture is invisible to the human eye at some specific viewing angles. As an example, the texture effect includes at least one of dot texture, triangular texture, brushed texture, check texture, gradient texture, starry sky texture, imitation stone texture, wood grain texture, fabric texture, landscape texture, crystal texture, lens texture, stereoscopic relief, characters, graphics, symbols, numbers, beacons, and trademarks. It should be understood that the number of texture units can be selected according to actual needs.

In some embodiments, the plurality of texture units is arranged successively on the surface, as shown in FIG. 3A, four texture units 121, 122, 123, 124 are arranged successively adjacent to each other on the texture structure 12 in the form of a film layer. It should be understood herein that "adjacent" means that the contour boundaries of each texture unit are connected, overlapped, or close to each other, and the lines forming the respective contour boundaries may be constituted by texture structures or may be formed by ink printing. Although it is shown that regional areas of the surface occupied by each texture unit are substantially the same, the regional areas of the surface covered by each texture unit may be set to be different from each other as desired. In some embodiments, a plurality of texture units (for example, four texture units as shown in FIG. 3A) may be configured as one texture area A, two adjacent or close texture areas may be the same or different, and two texture structures adjacent to each other in two adjacent or close texture areas may also be the same or different. FIG. 3B exemplarily shows a distribution manner in which a plurality of texture areas A is successively arranged adjacent to each other on a surface.

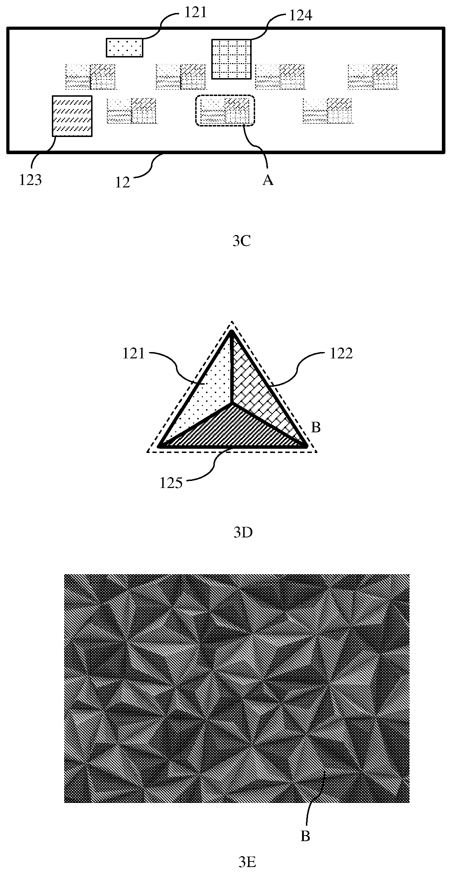

In some embodiments, the plurality of texture units may also be distributed to form a regular or irregular texture pattern on the surface. FIG. 3C exemplarily shows another distribution manner in which a plurality of texture areas A is distributed on the surface of the texture structure 12, and a plurality of texture units 121, 123, and 124, respectively having different texture structures, are also distributed on the surface of the texture structure 12 and staggered among the distributed texture areas A or adjacent to a certain texture area. Further, in the shown embodiment, a regional area of the surface of the texture structure 12 covered by the first texture unit 121 is different from that covered by the third texture unit 123 and the fourth texture unit 124. When two surfaces of the texture structure in the form of a film layer are provided with a plurality of texture units, the texture units on different surfaces may be the same or different, for example, the texture structures at corresponding positions on the cross section of the texture structure in the form of a film layer may be the same or different.

As an example, each texture unit and each texture area of FIGS. 3A to 3C are shown as having a generally rectangular shape, and other suitable shapes are possible, such as circles or other polygons, depending on the environment to which they are applied. For example, in the embodiment as shown in FIG. 3D, different from the above embodiment, the texture area B is shown as a substantially triangular shape, and each texture unit constituting one texture area B, such as the first texture unit 121, the second texture unit 122, and the fifth texture unit 125, are also configured as substantially triangular shapes. As such, the texture area B composed of a plurality of texture units with different texture structures presents different visual effects from various angles under the action of reflection and refraction of light, such as a virtual three-dimensional effect of light and dark surfaces. When the plurality of texture areas B is successively arranged adjacent to each other, as shown in FIG. 3E, the optical decorative film can present a visual effect such as a stereoscopic relief, enriching visual sensory experiences of the observer.

In some embodiments, unlike the texture structure 12 in the form of a film layer described above, the texture structure may be formed on one surface of the base layer. For example, it is formed on the surface of the base layer by an in-mold decoration technique (IMD).

Regardless of the arrangement, the plurality of texture units or the texture areas formed by the plurality of texture units may be designed in a local area on an upper surface of the optical decorative film that requires a pattern to satisfy the design intent or may cover the entire upper surface of the optical decorative film to satisfy the design intent. When the external ambient light or the incident light emitted by the external light source is irradiated to the upper surface of the optical decorative film, the light that is reflected and refracted by different texture structures and then enters the eyes of the observer will produce different surface effects due to different observation angles, so that rich and changeable sensory effects can be obtained with a compact product configuration in a limited space especially in the interior of a vehicle, and different experiences can be brought to consumers while enhancing decoration. In the following embodiments, a texture structure in the form of a film layer is described as an example unless otherwise specified.

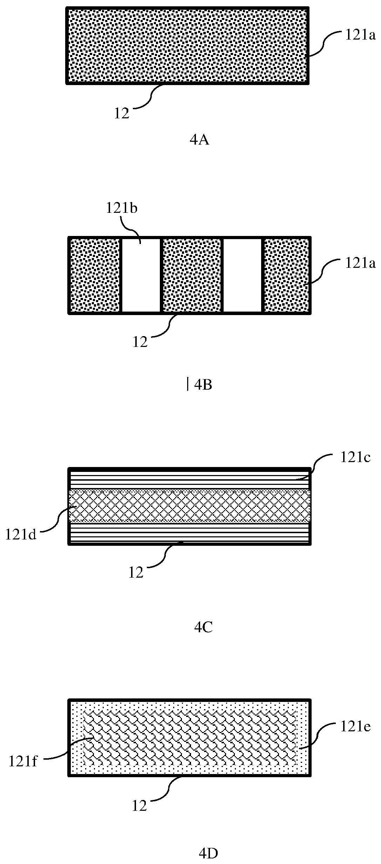

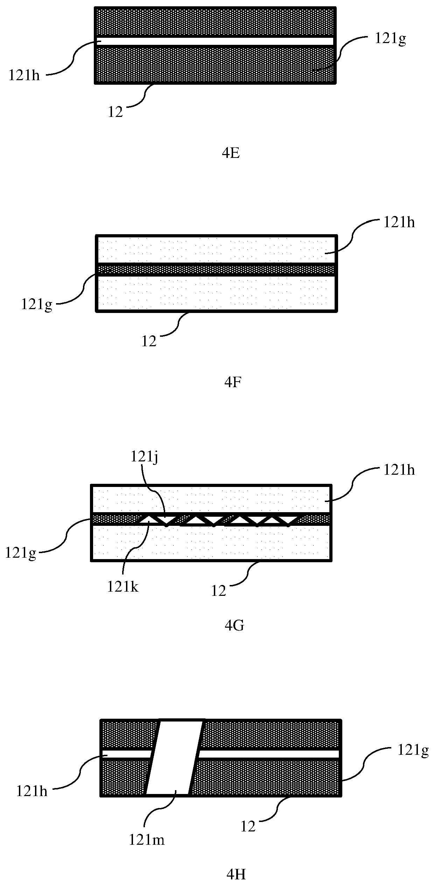

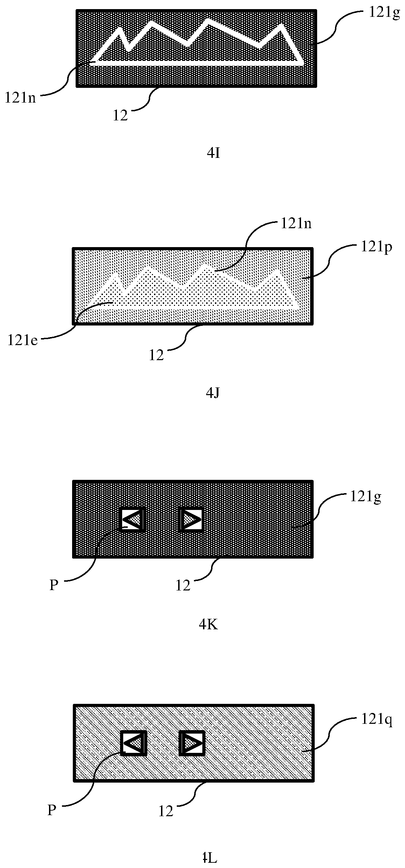

FIGS. 4A to 4L exemplarily show texture effects presented by texture structures of texture units of different embodiments, respectively. The texture structure 12 of FIG. 4A shows, for example, a texture portion 121a presenting a starry sky texture effect. In addition to the texture portion 121a, the texture structure 12 of FIG. 4B is provided with a non-texture portion 121b arranged in a staggered manner with the texture portion 121a. The texture structure 12 of FIG. 4C includes, for example, a texture portion 121c presenting a brushed texture effect and a texture portion 121d presenting a checkered texture effect. The texture structure 12 of FIG. 4D includes, for example, a texture portion 121e presenting a dot texture effect and a texture portion 121f presenting a fabric texture effect. The texture structure 12 of FIG. 4E includes, for example, different texture portions 121g and 121h presenting different texture effects to present a single-line texture effect, and the texture portion 121h may also be a non-texture portion. FIG. 4F is similar to FIG. 4E in that different texture portions 121g and 121h are replaced with each other. FIG. 4G is similar to FIG. 4F in that the texture portion 121g further includes texture portions 121j and 121k presenting the same or different triangular texture effects. FIG. 4H shows a variant of the embodiment of FIG. 4E, further including a texture portion 121m intersecting the texture portion 121h, and the width of the texture portion 121m and the texture portion 121h is different to present a multi-line texture effect. The texture structure 12 of FIG. 4I includes, for example, a texture portion 121g similar to the embodiment as shown in FIG. 4E, and a texture portion 121n forming a closed line and presenting a different texture effect. FIG. 4J is similar to FIG. 4I, where the texture portion 121g in FIG. 4I is replaced with the texture portion 121p presenting a different texture effect, and the closed line formed by the texture portion 121n includes, for example, the texture portion 121e presenting the texture effect as shown in FIG. 4D. The texture structure 12 of FIG. 4K includes, for example, a texture portion 121g similar to the embodiment as shown in FIG. 4E, and a beacon pattern P. FIG. 4I is similar to FIG. 4K, where the texture portion 1219 in FIG. 4K is replaced with the texture portion 121q presenting a different texture effect. The beacon pattern P may also adopt different texture designs to present surface effects, as will be described below.

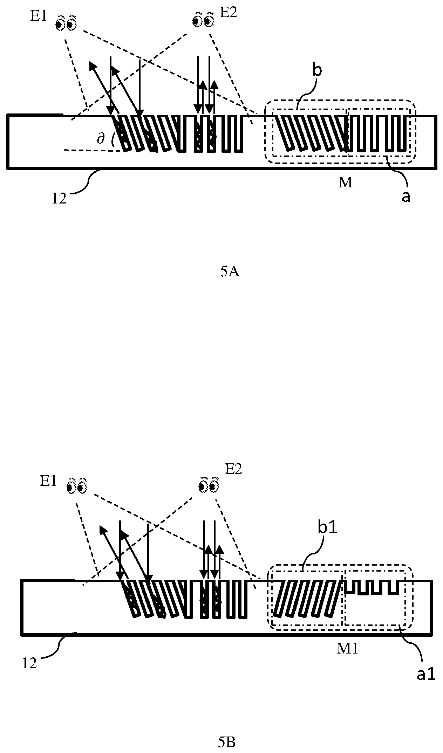

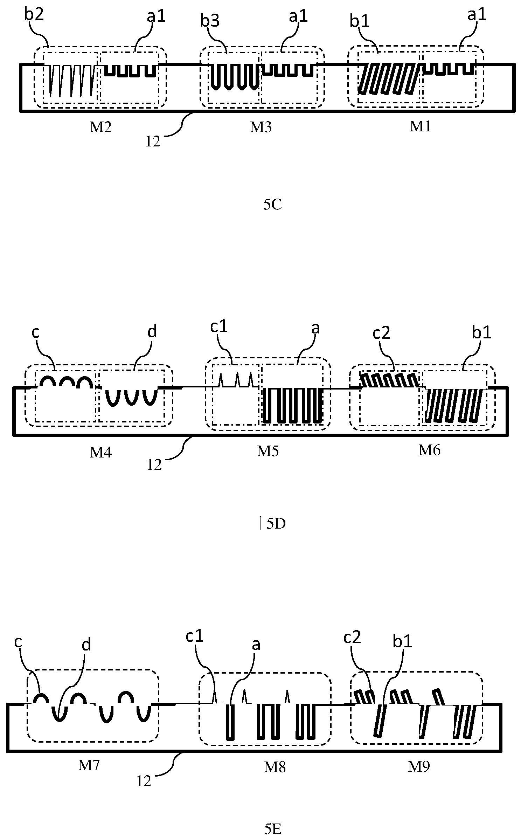

FIGS. 5A to 5E respectively show cross-sectional forms of texture structures of texture units according to different embodiments. As described above, the texture structure is in the form of a concave structure such as a microscopic V-shaped groove or an arc-shaped groove, or in the form of a raised protrusion structure form. In an alternative embodiment, the texture structure includes a plurality of grooves or a plurality of protrusions, or a combination of a plurality of grooves and a plurality of protrusions, where the plurality of grooves or a plurality of protrusions are arranged to have different heights, widths, shapes, inclination angles, or surface areas. As for the shape, it can be an arc-shaped groove or arc-shaped protrusion (such as a semi-circle, semi-ellipse), a V-shaped groove or V-shaped protrusion (such as a tapered, U-shaped), a striped groove or striped protrusion (such as a parallelogram), etc. In the embodiment as shown in FIG. 5A, the texture structure 12 includes a plurality of striped grooves, where a plurality of vertically extending striped grooves form a texture unit a, a plurality of obliquely extending striped grooves form a texture unit b, and the texture unit a and the texture unit b have substantially the same height and width and are combined to form a texture area M. Because of the reflection and refraction of different texture structures, different visual effects will be sensed when observed from different viewing angles E1 and E2. As an alternative, the inclination angle of the groove may be between 0 °C and 90 °C. The embodiment as shown in FIG. 5B is different from the embodiment as shown in FIG. 5A in that the texture unit a1 forming the texture area M1 has a reduced height as compared with the texture unit a, and the texture unit b1 has a different inclination angle as compared with the texture unit b. FIG. 5C exemplarily shows a form of different texture areas including a plurality of grooves, where the texture unit b2 of the texture area M2 is configured as a V-shaped groove and the texture unit b3 of the texture area M3 is configured as a substantially U-shaped groove as compared with the texture area M1.

In some embodiments, the texture structure includes a combination of a plurality of grooves and a plurality of protrusions, and the plurality of grooves and the plurality of protrusions are arranged successively or alternately. FIG. 5D exemplarily shows a sequential arrangement in which the texture unit c forming the texture area M4 is a semi-circular protrusion, and the texture unit d is a semi-elliptical groove. The texture unit a forming the texture area M5 is a striped groove similar to the texture area M, and the texture unit c1 is a tapered protrusion. The texture unit b1 forming the texture area M6 is a striped groove similar to the texture area M1, and the texture unit c2 is an inclined striped protrusion. FIG. 5E exemplarily shows a form of alternating arrangement, where the texture units c and d forming the texture area M7 are semi-circular protrusions and semi-elliptical grooves similar to the texture area M4 but arranged alternately with each other. The texture unit c1 and the texture unit a forming the texture area M8 are tapered protrusions and striped grooves similar to the texture area M5, but alternately arranged with each other. The texture unit c2 and the texture unit b1 forming the texture area M9 are striped protrusions and striped grooves similar to the texture area M6 but are alternately arranged with each other. It should be understood that the number of alternately arranged grooves and protrusions is not limited, that is, the number of protrusions/slots between two adjacent grooves/protrusions may be one, two, three or more.

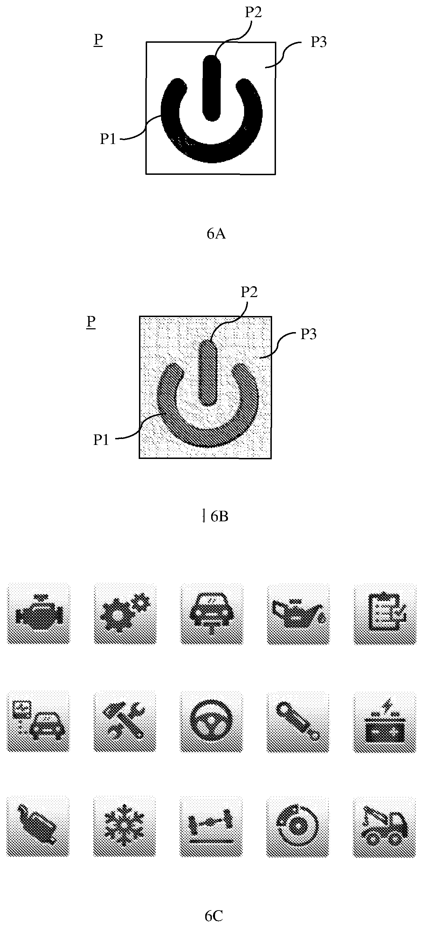

FIGS. 6A and 6B respectively show the surface effects of a beacon pattern P in the form of a switch that can be applied to the interior of a vehicle with different texture designs, where the beacon pattern P can be divided into an area P1 and an area P2, and a peripheral area not covered by the beacon pattern can be divided into an area P3, so that more feasible combinations of surface effects can be derived from the design of different areas.

In some embodiments, the area P1 and the area P2 of the beacon pattern P are covered by the same or different texture units or the same or different texture areas composed of a plurality of texture units, the covering manner may be continuously arranged or distributed, and the texture structures of the two areas are distributed, and the area P3 may be coated with ink or may not have ink. Under light illumination such as a backlight, the front surface of the beacon pattern may present a texture visual effect significantly different from that of the area P3, as shown in FIG. 6A, and the texture effect may be different when viewed from different viewing angles. As used herein, "backlight" refers to light emitted by a light source arranged on a side away from the observer. Based on this, in some embodiments, the beacon pattern may be designed to appear only under backlight conditions, and in the absence of backlight, the beacon pattern may not appear to provide a hidden effect. In some embodiments, the area P1 and/or the area P2 may be designed to be coated with ink, and the area P3 may be designed to cover a texture unit or a texture area. As such, for example, under the backlight condition, the beacon pattern may appear to be significantly different from the area P3 without texture effect, and further the similar effect described above can be obtained, which will not be described herein.

In some embodiments, the area P1 and the area P2 and the area P3 of the beacon pattern P are each covered with texture units or texture areas, as shown in FIG. 6B. In this manner, the entire surface area with the beacon pattern can present an optical texture effect under light irradiation, where the texture units or texture areas of the areas P1 and P2 are preferably different from those of the area P3, so that the beacon pattern is presented by different texture changes presented at different viewing angles. Also alternatively, in some embodiments, the beacon pattern having a texture effect can be visualized under backlight conditions, while the beacon pattern can be hidden without backlight.

FIG. 6C shows a plurality of beacon patterns presenting a surface effect using an optical decorative film according to the present invention, and each beacon pattern can achieve the optical texture effect or visual effect described above. When each of the following alternative embodiments is applied in combination, more diverse surface effects can also be obtained.

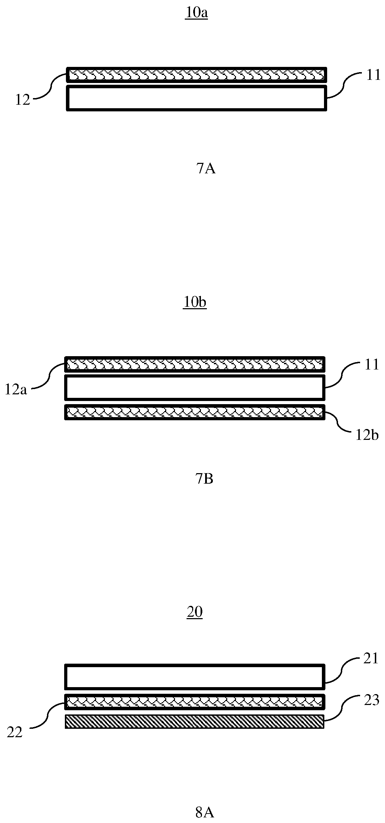

The embodiment as shown in FIG. 7A is a variant of an embodiment as shown in FIG. 2, which shows that the texture structure 12 of the optical decorative film 10a is arranged on the other surface of the base layer 11, i.e., an upper surface facing an observer. In other words, the optical decorative film 10 of FIG. 2 has an internal texture structure, while the optical decorative film 10a of FIG. 7A is of an external texture structure, and the observer can not only observe the changed texture effect from the upper surface of the optical decorative film 10a, but also sense a micro-touch feeling due to the microstructure of the texture structure 12, bringing a sense of experience different from the conventional experience. Alternatively, an optical coating may also be applied on the outer texture structure to further enhance the optical effect.

FIG. 7B is another variant of the embodiment as shown in FIG. 2, which shows that the optical decorative film 10b has texture structures 12a, 12b arranged on two surfaces of the base layer 11, and the texture structures of different surfaces are the same or different, so that a rich optical texture effect can be obtained by the double-layer texture structure. For example, when the texture structures 12a and 12b are all pattern textures (such as brushed texture, checkered texture, triangular texture, etc.), the optical decorative film 10b can present a visual effect of superimposing double-layer texture structures. When the texture structure 12a is a pattern texture and the texture structure 12b is a lens texture (convex lens, concave lens, Fresnel lens, cylindrical lens, etc.), the optical decorative film 10b can present a double-layer texture effect, and the pattern texture combined with the lens texture can present a sense of depth. When the texture structure 12a is a lens texture and the texture structure 12b is a pattern texture, the optical decorative film 10b can present a double-layer texture effect, and the pattern texture has an effect of enlarging and displaying the texture effect due to the lens texture. When the texture structures 12a and 12b are both lens textures, the optical decorative film 10b presents a double-layer texture effect and can realize the visual effect of crystal texture.

In another embodiment as shown in FIG. 8A, the optical decorative film 20 further includes a plating layer 23 in addition to a base layer 21 and a texture structure 22 attached to the base layer 21. As a highly reflective film layer, the plating layer 23 is preferably arranged on a surface of the texture structure 22, but is not limited thereto, and may be arranged on the surface without the texture structure in some cases. As an alternative, the plating layer may be a physical vapor deposition (PVD) or chemical vapor deposition (CVD) film layer formed by a vacuum plating technique such as evaporation plating or magnetron sputtering plating, and may be selected as a single-layer film or is formed by laminating a plurality of layers of films, and the film thickness may be selected from 1 nm to 1000 microns, preferably from 2 nm to 100 microns, for example from 10 to 50 microns. The plating layer includes a metal plating layer and a non-metal plating layer, and as an alternative, the plating layer may be a metal plating material such as indium, tin, titanium, and aluminum and a compound of various targets, or silicon, niobium and oxides thereof such as silicon dioxide, or a non-metal plating material such as carbon dioxide and nitrogen. In some embodiments, the plating layer may include a metallic ink. The plating layer typically has a metallic luster, thereby increasing the gloss of the film, giving it a metallic technical appearance, and in the shown embodiment, in particular increasing the reflective effect of the texture structure, thereby increasing the optical texture effect. In some embodiments, the plating layer may also have a color.

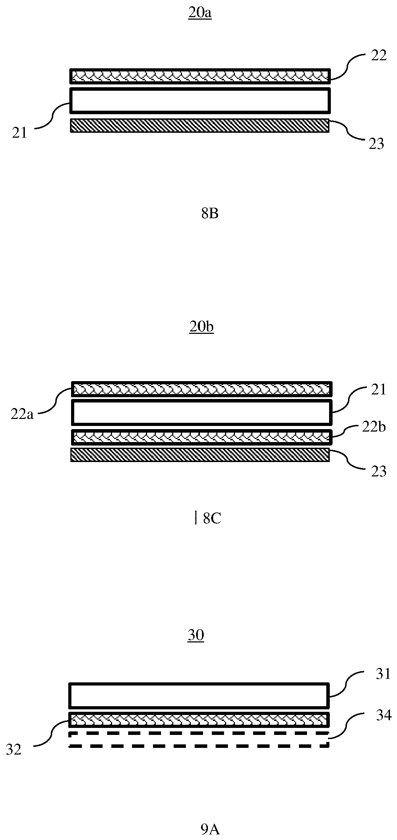

FIG. 8B is a variant of an embodiment as shown in FIG. 8A, which shows that a plating layer 23 and a texture structure 22 in the optical decorative film 20a are attached to two surfaces of the base layer 21, respectively, that is, the optical decorative film 20a has an external texture structure. FIG. 8C is another variant of the embodiment as shown in FIG. 8A, which shows that the optical decorative film 20b has texture structures 22a, 22b arranged on two surfaces of the base layer 21, and thus, as described above, a rich optical texture effect can be obtained by the double-layer texture structure.

In another embodiment as shown in FIG. 9A, the optical decorative film 30 further includes a pattern layer 34 in addition to a base layer 31 and a texture structure 32 attached to the base layer 31. In this embodiment, the pattern layer 34 may be directly attached to the texture structure 32 using a process such as ink printing to form a pattern or texture such as starry sky dots, characters, beacons, patterns, lines, etc., as long as the ink material of the pattern layer does not fill the texture structure to affect the texture effect. Similarly, the pattern layer may be a single-layer film or a coating layer or may be stacked from multilayer films. In some embodiments, the ink material forming the pattern may have a color, such as black, white, blue, red, etc., or a mixture of at least one color, or a color-changing ink, which may be transparent, translucent, or opaque, thereby increasing the level of variant in the visual effect. The ink may cover all or a local area of the pattern layer and alternatively fill the texture structure as desired. For example, in some embodiments, when the ink is black ink, the texture structure is filled with the black ink, and the texture structure of the film is invisible under the illumination of an external light source or natural light, but the texture is visible under the illumination of a backlight, thereby achieving texture hiding. In some embodiments, the ink may be a metallic ink, which can reduce the transmission of light and increase the reflection of light, thereby enhancing the reflective effect of the texture structure. In some embodiments, the metallic ink covers at least a local area of the pattern layer, that is, the non-metallic ink area forms a pattern or texture, or the non-metallic ink fills the texture structure, and the metallic ink area increases the reflective effect of the texture structure, so that the entire film can present a surface effect of combining the hidden texture with the visible texture.

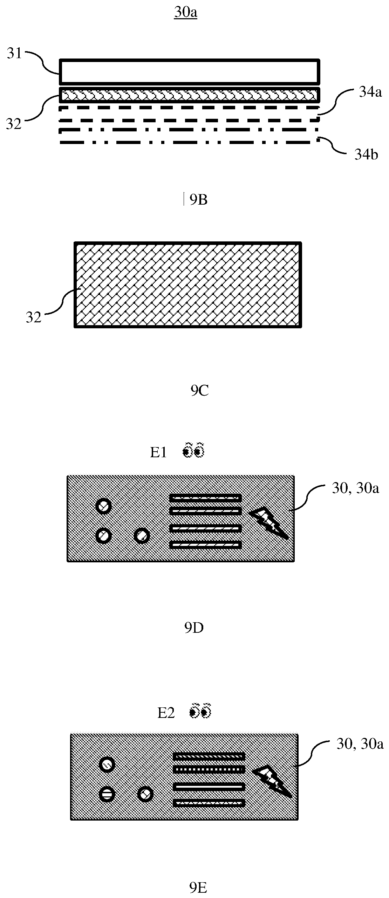

FIG. 9B is a variant of an embodiment as shown in FIG. 9A, which shows that the optical decorative film 30a has two pattern layers 34a, 34b attached to the texture structure 32. The pattern or texture or material or color of the two pattern layers may be the same or different, for example, the pattern layer 34a may be black ink or ink of other color, and the pattern layer 34b may be metallic ink. When the pattern layer 34b is translucent, it can transmit light from the backlight. FIG. 9C shows a schematic diagram showing a texture structure 32 in the embodiment as shown in FIG. 9A or FIG. 9B. FIGS. 9D and 9E show different surface effects presented at different viewing angles E1, E2 by the optical decorative film in combination with the internal texture structure and pattern layer shown in FIG. 9C, respectively.

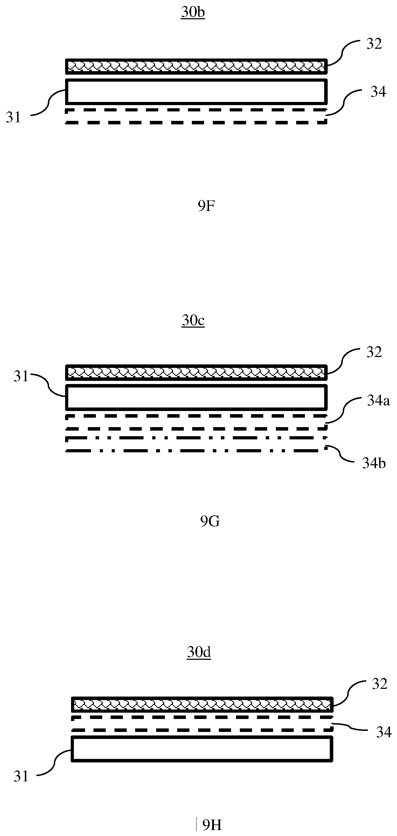

FIG. 9F is a variant of an embodiment as shown in FIG. 9A, and FIG. 9G is a variant of an embodiment as shown in FIG. 9B, respectively, which shows the pattern layer 34 (or pattern layers 34a, 34b) and texture structure 32 attached to two surfaces of the base layer 31, respectively. FIG. 9H is another variant of an embodiment as shown in FIG. 9A, where the pattern layer 34 is attached to the texture structure 32 and is attached to the same surface of the base layer 31 with the texture structure 32. That is, the optical decorative films 30b, 30c, and 30d each has an external texture structure, and the pattern layer can be changed in different forms and positions as desired. When the pattern layer is located on the bottom layer of the film, an ink or composite coating having adhesive properties can be selected, which can play a role of adhesion to the substrate when applied to the optical trim assembly.

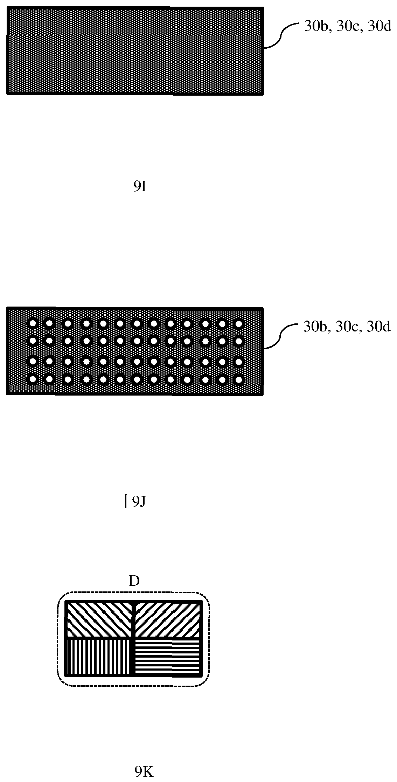

FIGS. 9I and 9J show the surface effect of the optical decorative film incorporating an external texture structure and a pattern layer, respectively, in the absence of a light source and in the presence of a light source. Since it is in the form of an external texture structure, the light source here can be an external light source or natural light, or a backlight. When illuminated by a light source, the film presents a texture effect with a plurality of small circular areas as shown in FIG. 9J. In some embodiments, the texture structure of each circular area may be the same or different texture units or texture areas, and FIG. 9K exemplarily shows a texture structure of one circular area, that is, a texture area D composed of a plurality of texture units.

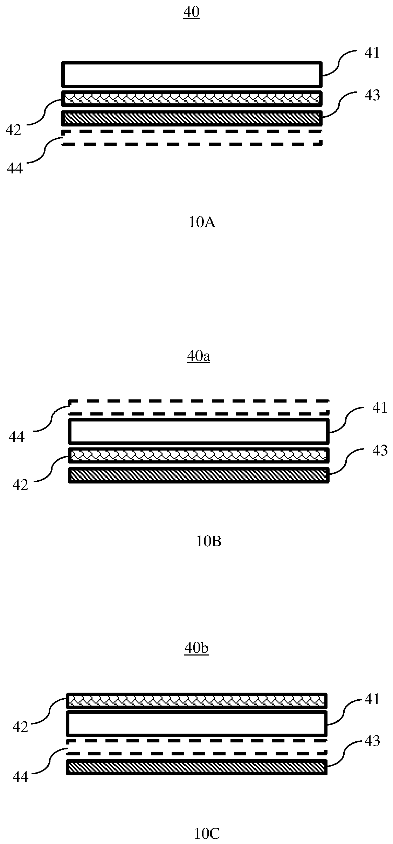

In another embodiment as shown in FIG. 10A, similar to the embodiment as shown in FIG. 9A, the optical decorative film 40 includes a base layer 41 and a texture structure 42 attached to the base layer 41, and a pattern layer 44, except that the pattern layer 44 is attached to the texture structure 42 via a plating layer 43. In this manner, by adjusting the thickness and light transmittance of the plating layer 43, it is possible to realize the hiding characteristics of the pattern on the pattern layer 44. For example, the pattern of the pattern layer is hidden without backlight, where backlight means that the light source is arranged on the side of the pattern layer 44 facing away from the plating layer 43, that is, below FIG. 10A, so that incident light propagates toward the plating layer 43 and the texture structure 42. When a backlight is provided, since the pattern layer 44, the plating layer 43, and the texture structure 42 have light transmittance, the hidden pattern can be revealed on an outer surface of the base layer 41. As such, in combination with the plurality of texture units having different texture structures on the texture structure 42, an observer observing from above the base layer 41 can sense the texture change effect under the external ambient light situation, or sense the visual effect of combining the texture change and the pattern under the backlight situation, and the experience is richer. In addition, the plating layer 43 can also increase reflection of external light, thereby enhancing the texture effect.

In the embodiment as shown in FIG. 10B, similar to the embodiment as shown in FIG. 10A, the optical decorative film 40a includes a base layer 41 and a texture structure 42 attached to the base layer 41, and the plating layer 43 is attached to the texture structure 42, except that the pattern layer 44 and the texture structure 42 are attached to two surfaces of the base layer 41, respectively. In this manner, the observer can also sense the visual effect of the combination of texture change and pattern from above the optical decorative film 40a in the case of external ambient light. FIG. 10C is another variant of an embodiment as shown in FIG. 10A, which shows that the pattern layer 44 and the texture structure 42 of the optical decorative film 40b are attached to two surfaces of the base layer 41, respectively, but the texture structure 42 of the optical decorative film 40b is an external texture as compared to the embodiment as shown in FIG. 10B.

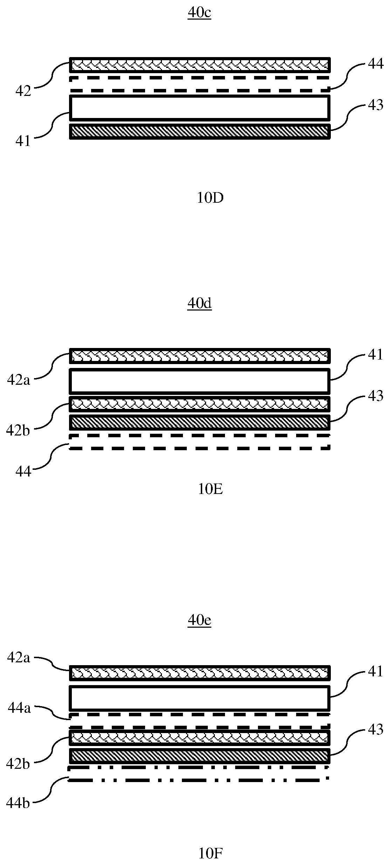

FIG. 10D is a variant of an embodiment as shown in FIG. 10C, which shows that the pattern layer 44 in the optical decorative film 40c is attached to the texture structure 42 and is attached to the same surface of the base layer 41 with the texture structure 42. FIG. 10E is another variant of an embodiment as shown in FIG. 10A, which shows that the optical decorative film 40d has texture structures 42a, 42b arranged on two surfaces of the base layer 41. FIG. 10F is a variant of an embodiment as shown in FIG. 10E, in addition to the texture structures 42a, 42b arranged on two surfaces of the base layer 41, which shows that the optical decorative film 40e has two pattern layers 44a, 44b respectively attached to the texture structure 44a and attached to the texture structure 42b via the plating layer 43.

The different arrangements of the above-mentioned different layers can present different visual effects from the conventional visual effects, enriching the visual sensory experience of the observer, and will not be repeated here for the sake of conciseness.

As described above, the optical decorative film may have a color effect by the color characteristics of the base layer and/or the texture structure and/or the plating layer and/or the pattern layer itself, and in some embodiments, the color effect may also be obtained by a separate color layer. As an alternative, the color layer is attached between two any adjacent layers of the base layer, the texture structure, the plating layer, and the pattern layer.

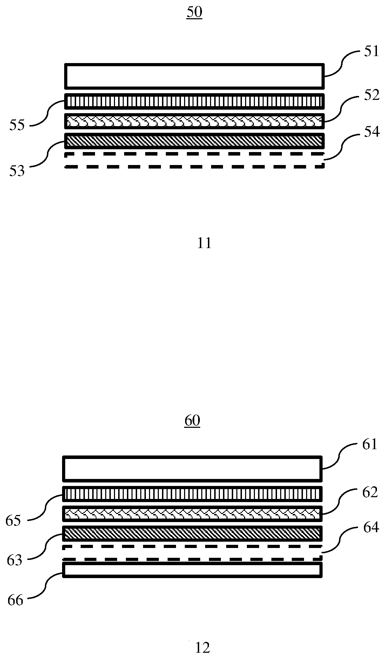

FIG. 11 shows an optical decorative film 50 according to an embodiment in which a color layer 55 is attached to the surface of the texture structure 52, for example sandwiched between the base layer 51 and the texture structure 52, so that the color effect is directly visible on the outer surface of the base layer 51. The color layer may be a single-layer film or coating or formed by laminating a plurality of films, and may realize a single color (such as blue, green, dark green, etc.) or a plurality of colors by printing or offset printing technology, or may be a gradient color, such as gradually transitioning from white to green, or gradually transitioning from black to color (such as green, blue, etc.) and then transitioning to white, etc. For example, the color layer may be selected as an ink layer, and the layer thickness may be from 1 to 100 microns, preferably from 10 to 50 microns. By providing the color layer 55, the bright color appearance effect of the optical decorative film 50 is increased and combined with the texture structure 52 and the plating layer 53/pattern layer 54, a richer light effect is presented. The ink may cover all areas or local areas of the color layer as desired. In some embodiments, the color layer may include a metallic ink to provide a glossy effect.

In the embodiment as shown in FIG. 12, the optical decorative film 60 includes a base layer 61 and a texture structure 62 attached to the base layer 61, and a plating layer 63 attached to the texture structure 62 and a pattern layer 64 attached to the plating layer 63, and a color layer 65 is arranged between the base layer 61 and the texture structure 62. In addition, a protective layer 66 is provided below the pattern layer 64 to provide durability and reliability in use. As such, the optical decorative film 60 is integrally constructed as a film having a texture, a pattern and a color, and the film has a high gloss metallic texture and a brilliant color. Under the ambient light condition, the optical decorative film 60 has different texture effects and color effects changing with the viewing angle, and under the backlight condition, the optical decorative film 60 can show different texture effects and color effects at different viewing angles, and at the same time, it can also show the pattern hidden under the plating layer 63 to realize different light effects of the optical decorative film under the conditions of no backlight and backlight. Compared with the existing design, the optical decorative film of the present invention provides unique decorative effects, including but not limited to multi-angle transformation texture, high-gloss metallic texture, brilliant colors, invisible patterns, etc., and brings a new visual experience to consumers.

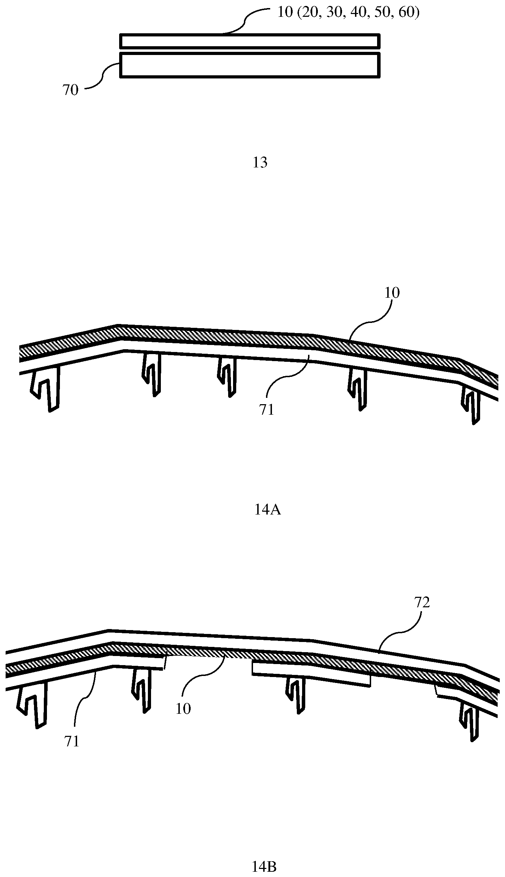

The optical decorative films 10, 10a, 10b, 20, 20a, 20b, 30, 30a, 30b, 30c, 30d, 40, 40a, 40b, 40c, 40d, 40e, 50, 60 in each of the above-described embodiments can be integrally injection molded into an optical trim assembly with a substrate, e.g., a plastic material by an in-mold decoration technique (IMD), such as in-mold insert injection molding (IML), a hot pressing process, a three-dimensional surface decoration process (TOM), an adsorption process, etc., as shown in FIG. 13, a substrate 70 is integrally injection molded to the surface of the optical decorative film (e.g., 10, 20, 30, 40, 50, 60, and various variants thereof). As an alternative, the substrate and the optical decorative film may be connected by an optical adhesive. The substrate 70 may be injection molded on the outer surface or the inner surface of the optical decorative film when the optical effect is satisfied, depending on various needs. The substrate 70 may be selected from a suitable material such as PC, PMMA, ABS, etc. Accordingly, the optical trim assembly is suitable for mass production to save production costs, and can be widely used in various cases, including but not limited to trim parts inside vehicles, and can meet different decoration needs of consumers in limited space.

Depending on various needs, the optical decorative film forms an outer surface or an intermediate layer of the optical trim assembly. In the embodiment as shown in FIG. 14A, taking the optical decorative film 10 as an example, the optical decorative film 10 is attached to a substrate in the form of, for example, a framework 71 and constitutes an outer surface of the optical trim assembly. In the embodiment as shown in FIG. 14B, the optical decorative film 10 is attached to a substrate in the form of a framework 71, and the optical trim assembly further includes an outer layer member 72, that is, the optical decorative film 10 is attached between the outer layer member 72 and the framework 71. The outer layer member may be a plastic member having a thickness, such as PC, PMMA, PU, or a transparent coating, such as varnish. The thickness can be selected from 0.1 mm to 5 mm, preferably from 1.5 mm to 3 mm. The outer layer member may be configured to provide at least one of a hard touch, a soft touch, a metallic touch, scratch resistance, abrasion resistance, and chemical resistance.

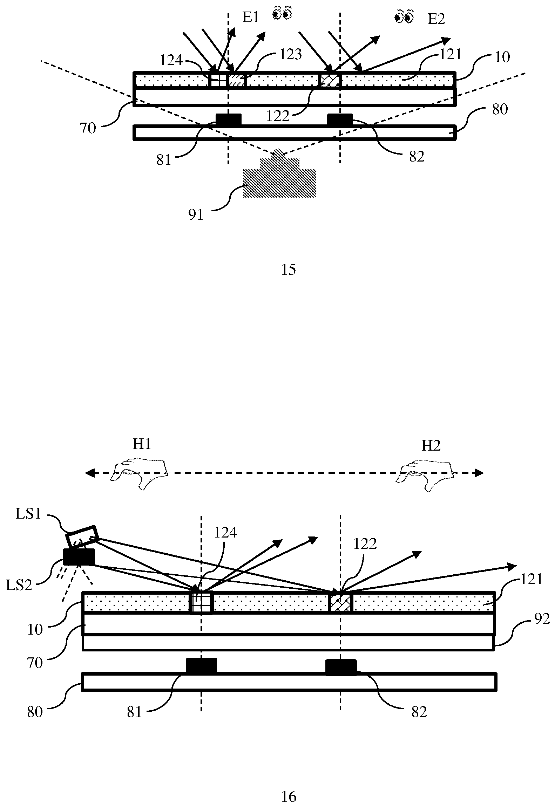

The optical trim assembly preferably includes a backlight, in the embodiment as shown in FIG. 15, taking the optical decorative film 10 as an example, the backlight 80 is arranged on a side of the substrate 70 away from an observer, thus the light emitted by the backlight 80 passes through the optical decorative film 10 to present a texture effect and/or pattern and/or color on the outer or upper surface of the optical decorative film 10 (i.e., above the optical trim assembly of FIG. 15). The backlight is, for example, a point-like or line-like light source, for example a light emitting diode (LED) bead or an LED light strip, and one or more LED beads may be arranged as desired. For example, a first LED 81 and a second LED 82 arranged on a PCB board are exemplarily shown in FIG. 15. In addition, combined with the design and control of the backlight 80, such as the lighting state and/or color and/or light intensity and/or lighting time of one or more LEDs, not only can the above-described various rich and changeable optical effects be realized, but also can be separately or simultaneously lit to realize dynamic/static lighting effects, such as running water, flickering, breathing, sense of depth, etc., which can further enrich the lighting effect and meet the needs of some specific scene atmospheres.

In some embodiments, the optical trim assembly further includes an external light source, as shown in FIG. 16, and the external light sources LS1 and LS2 are arranged on a side of the substrate 70 proximate to the observer. In some embodiments, as described above, the optical decorative film 10 further includes ink attached to the texture structure, the ink filling the texture structure so that the texture effect is invisible to the observer when the external light source is turned off, and the texture effect is visible to the observer when the external light source is turned on.

In some embodiments, the optical trim assembly further includes an camera component, and in the embodiment as shown in FIG. 15, the camera component 91 is arranged on a side of the substrate 70 away from the observer to capture the position of the observer, and then controls the PCB board so that the backlight or the external light source changes the operating state in response to the change of the viewing angle of the observer, and then changes the texture effect and/or pattern and/or color presented by the upper surface of the optical decorative film. The operating state herein includes, but is not limited to, the lighting state and/or the color and/or the light intensity and/or the lighting time and/or the illumination position and/or the illumination angle and/or the dynamic effect mentioned above.

In this manner, the different texture structures of the plurality of texture units of the optical decorative film 10 cause the optical texture effect to be presented to change with the change of the viewing angle of the observer, and as shown by the arrow in FIG. 15, the reflection angles generated by the external ambient light incident on the first texture unit 121, the second texture unit 122, the third texture unit 123, and the fourth texture unit 124 are all different, so that the observed optical texture effect is significantly different for a viewing angle E1 and a viewing angle E2 different from the viewing angle E1. When the backlight is turned on to light the first LED 81 and/or the second LED 82, the refraction angles of the incident light emitted by the backlight are different at different texture units (not shown for simplification), so that the optical texture effects observed at the viewing angle E1 and the viewing angle E2 are significantly different, and the optical texture effects at this time are also significantly different from those when the backlight is not turned on, even if the viewing angle E1 and the viewing angle E2 are not changed. When the camera component 91 is incorporated, the camera component can capture the position and the viewing angle of the observer within the imaging range (as shown by the dotted line in the figure), and then control the backlight 80 to change the operating state with the change of the viewing angle, thereby realizing the function of visual tracking interaction. When applied to a vehicle interior trim, a beacon may be formed by a texture and/or pattern, for example, providing a visual change in the beacon as the viewing angle varies.

In some embodiments, the optical trim assembly further includes a sensor including any one or more of a capacitive film, a force sensor, an infrared sensor, a distance sensor, and an ultrasonic sensor. In some embodiments, the sensors listed above may include a single sensor or a sensor matrix composed of a plurality of sensors. In some embodiments, there may be one or more sensor forms in the sensor matrix. In the embodiment as shown in FIG. 16, taking a sensor in the form of a capacitive film as an example, the capacitive film 92 is arranged on a side of the substrate 70 away from the observer to sense the gesture of the observer, so that the backlight or the external light source changes the operating state in response to the change of the gesture of the observer, and then changes the texture effect and/or pattern and/or color displayed on the upper surface of the optical decorative film.

In this manner, the optical texture change presented by the optical decorative film 10 is similar to the manner described above, that is, the optical texture effect observed at different viewing angles is significantly different under the external ambient light condition, and the optical texture effect observed at different viewing angles is also significantly different under the condition of turning on the backlight. In addition, FIG. 16 also shows an optical texture effect that can be produced when the external light source is changed, for example, the incident angle of incident light emitted by the external light source at different positions is different, or the incident direction of natural light generated at different time periods is different. As shown by arrows in the figure, the reflection angles generated by the first external light source LS1 and the second external light source LS2 on the first texture unit 121, the second texture unit 122, and the fourth texture unit 124 are all different, so that the optical texture effects observed at different viewing angles are significantly different. When the capacitive film 92 is combined, corresponding to the gesture H1 and the gesture H2 at different positions, when the gesture moves along the dotted arrow in the figure, the backlight 80 or the external light sources LS1 and LS2 are further controlled to change the operating state according to the change of the gesture according to the change of the capacitance, and the function of gesture tracking interaction is realized. This gesture, the optical texture on the surface of the film and the interactive rhythm of the backlight or external light source realizes the scientific and technological visual effect of the optical trim assembly and improve the product competitiveness and consumer experience comfort. Similarly, a beacon may be formed, for example, by textures and/or patterns, providing visual changes in the beacon that vary with gestures.

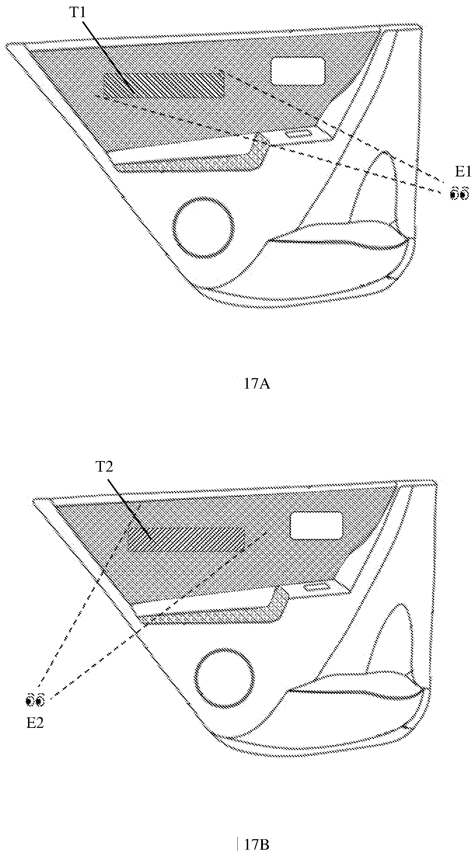

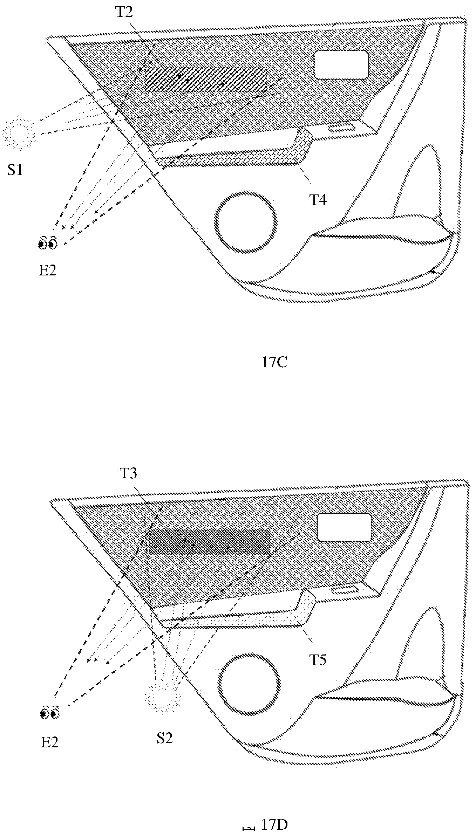

FIGS. 17A and 17B respectively show the surface effects of the optical trim assembly applied to interior of a vehicle and presented at different viewing angles. Taking the vehicle trim door panel as an example, different surface effects T1 and T2 can be observed in the same area at the viewing angle E1 in FIG. 17A and the viewing angle E2 in FIG. 17B. FIGS. 17C and 17D respectively show the surface effects of the optical trim assembly applied to interior of a vehicle and presented at the same viewing angle and different irradiation angles of the external ambient light, where when the light ray is converted from the position S1 in FIG. 17C to the position S2 in FIG. 17D, the surface effect T2 observed at the same viewing angle E2 is also converted into a different surface effect T3. At the same time, the surface effects presented by the internal texture structure and the external texture structure are also shown at a trim door handle, where the surface effect T4 presented in FIG. 17C is an external texture structure, and a micro-touch feeling can be sensed when a finger touches it, and the surface effect T5 presented in FIG. 17D is an internal texture structure, which may have a depth-of-field texture.

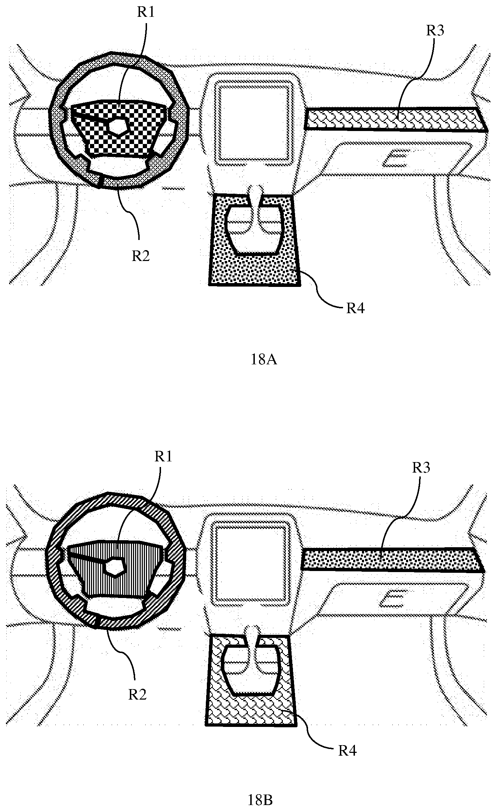

FIGS. 18A and 18B respectively show surface effects of an optical trim assembly applied to different locations in the interior of a vehicle and at different viewing angles. At different viewing angles, the surface effects presented by different areas R1 (instrument panel), R2 (steering wheel), R3 (fillet), and R4 (sub-instrument panel) in FIG. 18A can be changed to different surface effects in FIG. 18B.

By providing a plurality of texture units having different texture structures, the optical decorative film of the present invention can realize the lighting effects of different viewing angles and different reflection and refraction when the external ambient light is irradiated and the light source irradiates the film in the lighting state when the backlight or the external light source is provided, and can present changing light effects for different observation angles or observation ranges of the observer. When combined with a camera component or a capacitive film, it is possible to provide a function of visual tracking or gesture tracking interaction, thereby creating a multi-level and diversified decorative effect different from that of the prior art. Depending on different application requirements and application scenes, the optical decorative film of the present invention can provide at least one of the following optical effects: (a) a projection effect and/or a decorative effect and/or a color effect and/or a pattern effect and/or a surface effect and/or a texture effect provided by the optical decorative film, and/or (b) a depth-of-field effect and/or a decorative effect and/or a color effect and/or a pattern effect and/or a surface effect provided by an upper surface of the optical decorative film, and/or (c) an illumination effect provided by incident light emitted by a light source transmitting through the optical decorative film, and/or (d) an illumination effect provided by incident light emitted by a light source transmitting through the optical decorative film and the upper surface.

It should be understood herein that the embodiments shown in the drawings show only alternative architectures, shapes, dimensions and arrangements of the various optional components of the optical decorative film and optical trim assembly according to the present invention, however, they are merely illustrative and not limiting, and other shapes, dimensions and arrangements may be adopted without departing from the spirit and scope of the present invention.

It should be noted that the present invention (e.g., inventive concepts, etc.) has been described in the specification of this patent document and/or shown in the figures according to exemplary embodiments; the embodiments of the present invention are presented by way of example only and are not intended to be limiting the scope of the present invention. The structure and/or arrangement of the elements of the inventive concepts embodied in the present invention as described in the specification and/or shown in the figures is merely illustrative. Although exemplary embodiments of the present invention have been described in detail in this patent document, it will be readily understood by a person skilled in the art that equivalents, modifications, variations, etc. of the subject matter of the exemplary embodiments and alternative embodiments are possible and are considered to be within the scope of the present invention; all such subject matter (e.g., modifications, variations, embodiments, combinations, equivalents, etc.) are intended to be included within the scope of the present invention. It should also be noted that various/other modifications, variations, substitutions, equivalents, changes, omissions, etc. may be made in the configuration and/or arrangement of the exemplary embodiments (e.g., in terms of concept, design, structure, apparatus, form, assembly, construction, means, functions, systems, processes/methods, steps, sequence of process/method steps, operations, operating conditions, properties, materials, compositions, combinations, etc.)). Without departing from the scope of the present invention; all such subject matter (e.g., modifications, variations, embodiments, combinations, equivalents, etc.) are intended to be included within the scope of the present invention. The scope of the present invention is not intended to be limited to the subject matter (e.g., details, structures, functions, materials, behaviors, steps, sequences, systems, results, etc.) described in the specification and/or figures of this patent document. Considering that the claims of this patent document are to be properly construed to cover the full scope of the inventive subject matter (e.g., including any and all such modifications, variations, embodiments, combinations, equivalents, etc.): it is to be understood that the terminology used in this patent document is intended to provide a description of the subject matter of exemplary embodiments and is not intended as a limitation on the scope of the present invention.

It should also be noted that, according to the exemplary embodiments, the present invention may include conventional techniques (e.g., techniques embodied and/or integrated in the exemplary embodiments, modifications, variations, combinations, equivalents), or may include any other applicable techniques (present and/or future) having the ability to perform the functions and processes/operations described in the specification and/or shown in the figures. All of these techniques (e.g., techniques implemented in the form of embodiments, modifications, variations, combinations, equivalents, etc.) are considered to be within the scope of the present invention in this patent document.

## Claims

1. An optical decorative film for vehicles wherein the optical decorative film comprises:
- a base layer, and
- a texture structure;
wherein the texture structure is arranged on at least one surface and is configured to comprise a plurality of texture units,
wherein the texture structures of the texture units are different, so that the upper surface of the optical decorative film presents different surface effects at different viewing angles.

2. The optical decorative film according to claim 1,
wherein the plurality of texture units is arranged continuously or distributed on the surface.

3. The optical decorative film according to claim 1,
wherein regional area of the surface covered by each texture unit is the same or different.

4. The optical decorative film according to claim 1,
wherein the texture structure comprises an optical adhesive attached to the base layer by photolithography or transfer or imprinting.

5. The optical decorative film according to claim 1,
wherein the texture structure is formed on one surface of the base layer.

6. The optical decorative film according to claim 1,
wherein the base layer comprises any one of glass, plastic, veneer, film, leather, fabric, metal, and ceramic.

7. The optical decorative film according to claim 1,
wherein the surface effect comprises a texture effect presented by the texture structure, and the texture effect comprises at least one of dot texture, triangular texture, brushed texture, check texture, gradient texture, starry sky texture, imitation stone texture, wood grain texture, fabric texture, landscape texture, crystal texture, lens texture, stereoscopic relief, characters, graphics, symbols, numbers, beacons, and trademarks.

8. The optical decorative film according to claim 1,
wherein the texture structure comprises a plurality of grooves and/or a plurality of protrusions, and the plurality of grooves or the plurality of protrusions are arranged to have different heights, widths, shapes, inclination angles or surface areas.

9. The optical decorative film according to claim 8,
wherein the texture structure comprises a plurality of grooves and a plurality of protrusions arranged successively or alternately.

10. The optical decorative film according to claim 1,
further comprising a plating layer attached to a surface of the texture structure, or the plating layer and the texture structure are attached to two surfaces of the base layer, respectively; and/or.

11. The optical decorative film according to claim 10,
wherein the plating layer is a single-layer film or is formed by laminating a plurality of films.

12. The optical decorative film according to claim 10,
wherein the plating layer comprises a metallic ink.

13. The optical decorative film according to claim 1,
further comprising at least one pattern layer attached directly to the texture structure or attached to the texture structure via a plating layer, or the pattern layer and the texture structure being attached to two surfaces of the base layer, respectively.

14. The optical decorative film according to claim 13,
wherein the surface effect comprises a pattern presented by the pattern layer, and the pattern comprises at least one of a texture, a graphic, a pattern, a line, a character, a symbol, a number, a beacon, and a trademark.

15. The optical decorative film according to claim 13,
wherein the optical decorative film is provided to have a color obtained by at least one of the base layer, the texture structure, the plating layer, the pattern layer, and a separate color layer.

16. The optical decorative film according to claim 15,
wherein the color layer is attached between two any adjacent layers of the base layer, the texture structure, the plating layer, and the pattern layer.

17. The optical decorative film according to claim 15,
wherein the color layer and/or the pattern layer is a single-layer film or a coating layer or is formed by laminating a plurality of layers of films.

18. The optical decorative film according to claim 15,
wherein the color layer and/or the pattern layer comprises an ink covering all areas or local areas of the color layer and/or the pattern layer.

19. The optical decorative film according to claim 18,
wherein the ink comprises a metallic ink covering at least local areas of the color layer and/or the pattern layer.

20. The optical decorative film according to any one of claims 1 to 19,
wherein the optical decorative film provides at least one of the following optical effects:
(a) a projection effect and/or a decorative effect and/or a color effect and/or a pattern effect and/or a surface effect and/or a texture effect provided by the optical decorative film, and/or
(b) a depth-of-field effect and/or a decorative effect and/or a color effect and/or a pattern effect and/or a surface effect provided by an upper surface of the optical decorative film, and/or
(c) an illumination effect provided by incident light emitted by a light source transmitting through the optical decorative film, and/or
(d) an illumination effect provided by incident light emitted by a light source transmitting through the optical decorative film and the upper surface.

21. An optical trim assembly used for interior of a vehicle, wherein the optical trim assembly comprises the optical decorative film according to any one of claims 1 to 20, and a substrate, wherein the substrate is attached to at least one surface of the optical decorative film, the optical decorative film providing an outer surface or an intermediate layer of the optical trim assembly.

22. The optical trim assembly according to claim 21,
wherein the optical trim assembly comprises an outer layer member, the optical decorative film is attached between the outer layer member and the substrate, the outer layer member is configured to provide at least one of a hard touch, a soft touch, a metallic touch, scratch resistance, abrasion resistance, and chemical resistance.

23. The optical trim assembly according to claim 21,
further comprising a backlight arranged on a side of the substrate away from an observer, the light emitted by the backlight passing through the optical decorative film to present a texture effect and/or a pattern and/or a color on an upper surface of the optical decorative film.

24. The optical trim assembly according to claim 21,
further comprising an external light source arranged on a side of the substrate proximate to the observer, the optical decorative film further comprising ink attached to the texture structure, the ink filling the texture structure, so that the texture effect is invisible to the observer when the external light source is turned off, and the texture effect is visible to the observer when the external light source is turned on.

25. The optical trim assembly according to claim 23 or 24,
further comprising a camera component arranged on a side of the substrate away from the observer to capture the position of the observer, the backlight or the external light source changing an operating state in response to a change in a viewing angle of the observer, and then changing a texture effect and/or a pattern and/or a color presented by the upper surface of the optical decorative film.

26. The optical trim assembly according to claim 23 or 24,
further comprising a sensor arranged on a side of the substrate away from the observer to sense the gesture of the observer, the backlight or the external light source changing the operating state in response to the change of the gesture of the observer, and then changing the texture effect and/or pattern and/or color presented by the upper surface of the optical decorative film, the sensor comprising any one or more of a capacitive film, a force sensor, an infrared sensor, a distance sensor, and an ultrasonic sensor.
